# FASCICULE DE BREVET EUROPEEN

(11) **EP 1 414 219 B1**
(45) Date de publication et mention de la délivrance du brevet: **30.11.2005**
(21) Numéro de dépôt: 03103669.2
(22) Date de dépôt: 03.10.2003
(51) Int. Cl.: H04M 1/02, G06F 1/16

(54) **Appareil électronique portable et pliable**
Tragbares und klappbares elektronisches Gerät
Portable and foldable electronic device

(30) Priorité: 21.10.2002 FR 0213117
(43) Date de publication de la demande: 28.04.2004
(73) Titulaire: Sagem SA, 75015 Paris (FR)
(72) Inventeur: ROBERT, Stéphane, 95800, COURDIMANCHE (FR)
(74) Mandataire: Schmit, Christian Norbert Marie

(56) Documents cités:
- US-A- 5 363 089
- US-A- 5 898 600
- US-A- 5 987 704
- US-B1- 6 532 147

## Description

La présente invention a pour objet un appareil électronique portable, du type comportant une base et un couvercle. Ces d'appareils sont par exemple des ordinateurs portables, des assistants personnels de mémorisation, dit communément PDA, des téléphones mobiles, ou tous autres types appareils. Les appareils concernés par l'invention sont des appareils comportant une base, en général munie d'un clavier, et un couvercle en général muni d'un écran permettant notamment de visualiser le résultat des instructions frappées au clavier. Toutefois les notions de base et de couvercle peuvent être inversées, le clavier pouvant être sur le couvercle et l'écran sur la base. De même, alors que normalement l'appareil électronique portable refermé permet de protéger par des coques extérieures le clavier et l'écran mis ainsi en regard direct l'un de l'autre, il serait envisageable de disposer un clavier et ou un écran sur le dos de la base ou du couvercle respectivement.

Le problème présenté par ce type d'appareil électronique portable réside essentiellement dans la réalisation de la charnière d'ouverture et de fermeture. On connaît ainsi des appareils dans laquelle la charnière permettant de refermer l'appareil comporte fondamentalement des paliers circulaires, attachés à la base et au couvercle, et au travers desquels est engagé un arbre unique de rotation. Ce type de réalisation, simple, présente de nombreux inconvénients. D'une part, alors que l'appareil est en position ouverte ou fermée, la charnière est toujours visible. Elle constitue donc une protubérance qui peut être jugée disgracieuse, voire former un point de fragilité de l'appareil. En effet, si lorsque l'appareil est fermé, la charnière est protubérante par rapport au chant inférieur de l'appareil, lorsque ce dernier est posé sur ce chant, il repose uniquement sur la charnière et non pas sur la totalité du chant. A l'inverse, lorsque la charnière est rentrée de manière à ce que le chant de l'appareil soit relativement plat, cette dernière devient protubérante lorsque l'appareil est ouvert.

En outre, dans le domaine des téléphones mobiles, ce type de charnière est associé à une limitation de l'ouverture de l'appareil, de façon à ce que le couvercle présente par rapport à la base, en position ouverte, un angle de l'ordre de 160°. La charnière est donc munie de dispositifs de limitation d'ouverture. Ces dispositifs de limitation sont fragiles. Notamment, lorsqu'en position ouverte le téléphone mobile est comprimé entre deux plans, tendant à ouvrir son angle jusqu'à 180°. Il n'est pas actuellement possible de prévoir des matériaux qui résisteront à un effort raisonnable, quoique maladroit, appliqué pour ouvrir un tel téléphone mobile au-delà de son angle prévu d'ouverture, au delà de la limite d'élasticité des matériaux employés.

Sur le plan pratique, pour que ces appareils portables puissent tenir en position ouverte avec une orientation convenable de l'écran par rapport à un utilisateur, il est prévu que la charnière comportera des dispositifs de frottement permettant de trouver des positions stables d'ouverture, à 90°, à 110° et ainsi de suite selon les désirs de l'utilisateur. Ces dispositifs de frottement présentent cependant l'inconvénient qu'il n'est pas possible de prévoir une ouverture automatique de l'appareil : il y a contradiction dans les objectifs recherchés.

En outre, les charnières de type mono-axe présentent de nombreuses difficultés pour le passage de fils électriques conduisant les signaux de la base au couvercle et réciproquement. Dans un exemple, on sait que doivent passer dans cette charnière environ 120 connexions. Le problème se complique lorsqu'on sait que ces connexions doivent subir des torsions mécaniques répétées correspondant aux ouvertures et aux fermetures de l'appareil.

Différents mécanismes sont imaginés dans ce but. Un premier mécanisme consiste à réaliser en bayonnettes les différentes orientations subies par les fils. Au moment des ouvertures et fermetures, il en résulte une torsion de la partie transverse de ces connexions formant la bayonnette. Une telle solution n'est toutefois envisageable que si le diamètre de la charnière est important. Cette solution va donc à l'encontre des soucis d'escamotage évoqués ci-dessus. Dans une autre solution, les connexions sont portées par une nappe flexible, dite aussi flex, formant une hélice dont au moins un tour est enroulé autour de la charnière. Les différentes rotations sont donc le siège de flexions de cette nappe flexible : la fiabilité est bonne mais par contre l'encombrement est important également.

On connaît par ailleurs d'autres modes d'articulation. Dans ceux-ci la charnière comporte deux axes de rotation, parallèles l'un à l'autre et au plan du couvercle et de la base. Ce dernier type de charnière résout en partie certains des problèmes vus ci-dessus. Néanmoins, il ne permet pas de faire correspondre un état particulier d'ouverture du couvercle par rapport à la base à un mode particulier d'utilisation. Ainsi une indexation sur l'angle d'ouverture n'est pas envisageable car deux axes concourent à cette ouverture. Sur le plan pratique, à l'occasion de l'utilisation d'un téléphone mobile, ceci pourrait conduire à la nécessité, une fois que l'appareil est ouvert, d'avoir à appuyer sur un bouton d'une manière supplémentaire pour prendre la ligne alors que le téléphone mobile s'est mis à sonner pour un appel entrant.

En outre, un autre problème présenté par ce type de charnière se situe dans les formes des arêtes, en regard les unes des autres, des coques de la base et du couvercle. En effet, pour permettre l'ouverture, ces arêtes doivent être arrondies selon un arc de cercle permettant aux deux coques de s'ouvrir sans forcer l'une sur l'autre. Une telle situation présente alors l'inconvénient que ces arrondis forment des réceptacles pour recevoir des poussières qui peuvent s'engager dans l'articulation au point de l'user prématurément.

On connaît par ailleurs le document US-A-5 363 089 et le document US-B1-6 532 147, ce dernier ayant été déposé te 24 septembre 1999 et publié le 11 mars 2003.

Dans l'invention, on a résolu tous ces problèmes en choisissant une charnière, par exemple de type biaxe, possédant une première et une deuxième caractéristique, et de préférence les deux caractéristiques simultanément. Selon une première caractéristique, la charnière de type biaxe possède un plan commun à ses deux axes. Ce plan est alors orienté dans la charnière de telle façon que la normale à ce plan forme toujours une bissectrice de l'angle d'ouverture entre la base et le couvercle. De cette façon, il est possible d'avoir une indexation parfaite : la charnière ne pouvant pas occuper, pour un même état d'ouverture, des positions quelconques mais ne pouvant en occuper qu'une seule : celle où sa normale forme une bissectrice de l'angle. Dans ces conditions, il est possible d'aménager sur cette charnière des dispositifs divers, notamment des contacts, pour repérer la position en ouverture et pour commander en conséquence une utilisation particulière du téléphone mobile.

Comme autre caractéristique, pour éviter les frottements, on prévoit qu'au moment de l'ouverture les deux coques sont légèrement écartées l'une de l'autre, en plus du mouvement de rotation qu'elles subissent l'une relativement à l'autre. La charnière comporte alors à cet effet un mécanisme excentrique permettant ce décalage. Dans un perfectionnement, ce décalage est maximal pour une ouverture à 90° est devient nul pour une fermeture, ou pour une ouverture à 180°. La réalisation de ce décalage permet, notamment quand l'appareil est fermé, de prévoir que les coques sont bien plaquées l'une contre l'autre.

La réalisation de la charnière est alors suffisamment volumineuse, tout en étant insérée dans le corps de l'appareil, pour permettre d'y placer des accessoires importants. D'une part on peut y placer un haut-parleur. Celui-ci dispose alors de préférence de deux sorties : une sortie vers l'intérieur de l'appareil en position fermée et une sortie vers l'extérieur. Cette dernière sert notamment pour propager le son des sonneries au moment des appels entrants. Par ailleurs la charnière peut permettre de recevoir une caméra, elle-même orientable et dont l'utilisation, à titre d'appareil photographique ou à titre de visiophonie, peut être combinée avec une ouverture particulière et indexée de l'appareil. La solution biaxe présente par ailleurs une faculté de passage des connexions plus importantes.

L'invention à donc pour objet un appareil électronique portable comportant une base recouverte par un couvercle, et une articulation pour déplacer le couvercle en un mouvement de rotation par rapport à la base, caractérisé en ce que l'articulation comporte au moins un mécanisme excentrique pour moduler un écart entre deux pivots qui maintiennent la base et le couvercle au moment de la rotation.

L'invention sera mieux comprise à la lecture de la description qui suit et à l'examen des figures qui l'accompagnent. Celles-ci ne sont présentées qu'à titre indicatif et nullement limitatif de l'invention. Bien que l'invention soit décrite en référence à un téléphone mobile, les autres appareils disposant d'une base et d'un couvercle comme évoqués ci-dessus sont concernés. Les figures montrent :
- Figures 1a à 1e : des représentations en perspective d'un appareil électronique portable selon l'invention, dans différents états d'ouverture ou de fermeture ;
- Figures 2a et 2b : une représentation détaillée en perspective de la structure de la charnière préférée de l'invention permettant d'obtenir tous les fonctionnements évoqués ci-dessus ;
- Figure 3 : un détail de la charnière des figures 2a et 2b ;
- Figures 4a à 4c : une évolution de l'état de la charnière préférée de l'invention, de l'ouverture à la fermeture de l'appareil électronique portable ;
- Figures 5a à 5d : une autre représentation de la position dans l'espace de la charnière de l'invention passant de la fermeture à l'ouverture ;
- Figures 6a et 6b : deux exemples de réalisation d'une charnière selon l'invention, à caméra visible ou invisible selon les positions;
- Figures 7a à 7c : une variante de réalisation de la charnière de l'invention.

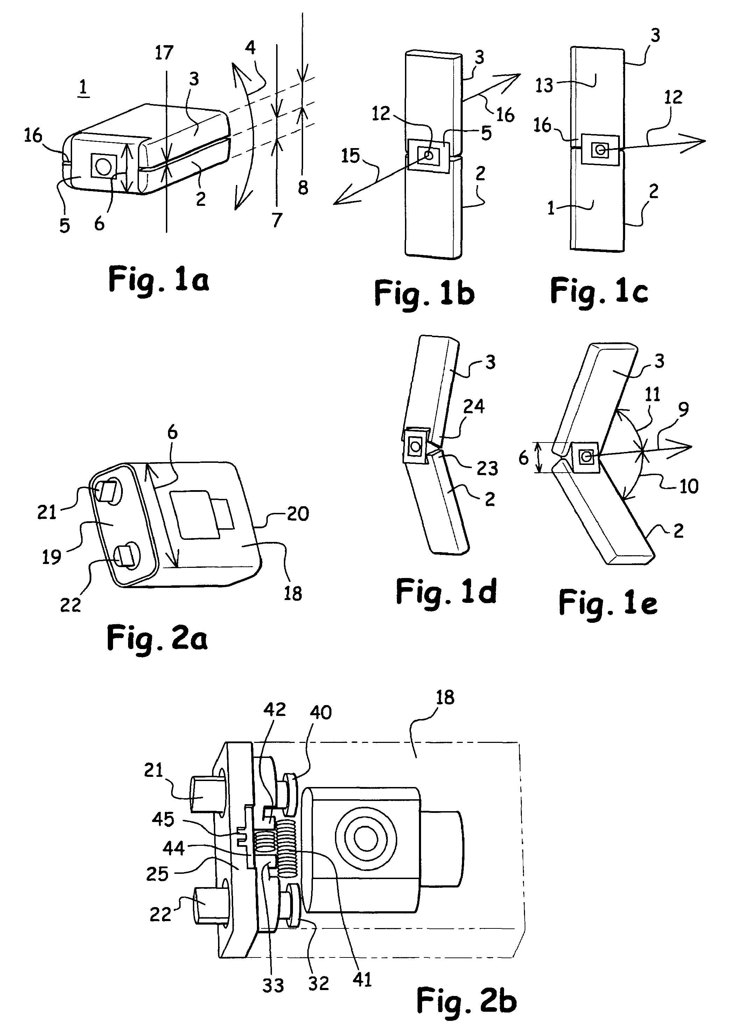

Les figures 1a à 1e montrent différents états, de la fermeture à l'ouverture, d'un appareil électronique portable selon l'invention. Un tel appareil 1 comporte une base 2 et un couvercle 3. Le couvercle 3 peut se déplacer par rapport à la base 2 selon un mouvement de rotation 4 autorisé par une articulation 5. L'articulation 5 comporte une charnière dont une hauteur 6 s'étend, en position fermée de l'appareil dans le sens de la somme des épaisseurs 7 et 8 de la base 2 et du couvercle 3. Comme le montre clairement les figures 1d et 1e, la charnière 5 comporte un mécanisme pour qu'une normale 9 à un plan contenant la hauteur 6 forme la bissectrice de l'angle résultant de l'ouverture du couvercle 3 par rapport à la base 2. Par exemple par rapport à la normale 9, la base 2 forme un angle 10 égal à l'angle 11 formé par le couvercle 9 par rapport à cette même normale 9.

En agissant ainsi, on est sûr que la charnière 5 occupe, pour un état d'ouverture donné de l'appareil, une position unique. De ce fait, il devient possible dans le mécanisme de la charnière 5 d'indexer la position en ouverture du couvercle 3 par rapport à la base 2 de façon à ce qu'un repérage d'une utilisation préférée soit détecté. Par exemple, figure 1e avec un angle d'ouverture de l'ordre de 110° entre la base et le couvercle, on pourrait imaginer que l'appareil 1, qui serait un téléphone mobile, serait posé sur un bureau, et qu'une écoute mains libres serait provoquée. Par contre figure 1d, l'ouverture plus grande peut correspondre à une écoute discrète, l'utilisateur du téléphone mobile étant le seul à entendre les sons diffusés. De même, figure 1 c, où le téléphone est ouvert à plat, l'utilisation peut être celle d'une visioconférence avec une caméra 12 tournée vers un utilisateur qui regarderait l'écran 13 porté par le couvercle 3 en même temps qu'il pourrait appuyer sur des boutons d'un clavier 14 porté par la base 2.

A l'opposé, figure 1b, la caméra 12 peut être orientée selon une direction 15 émergeant du dos de la charnière 5, en sens inverse d'une direction 16 à partir de laquelle on peut voir sur l'écran 13. Avec cette utilisation, on peut corriger une représentation d'une image qui pourrait être prise en photo, et éventuellement transmise.

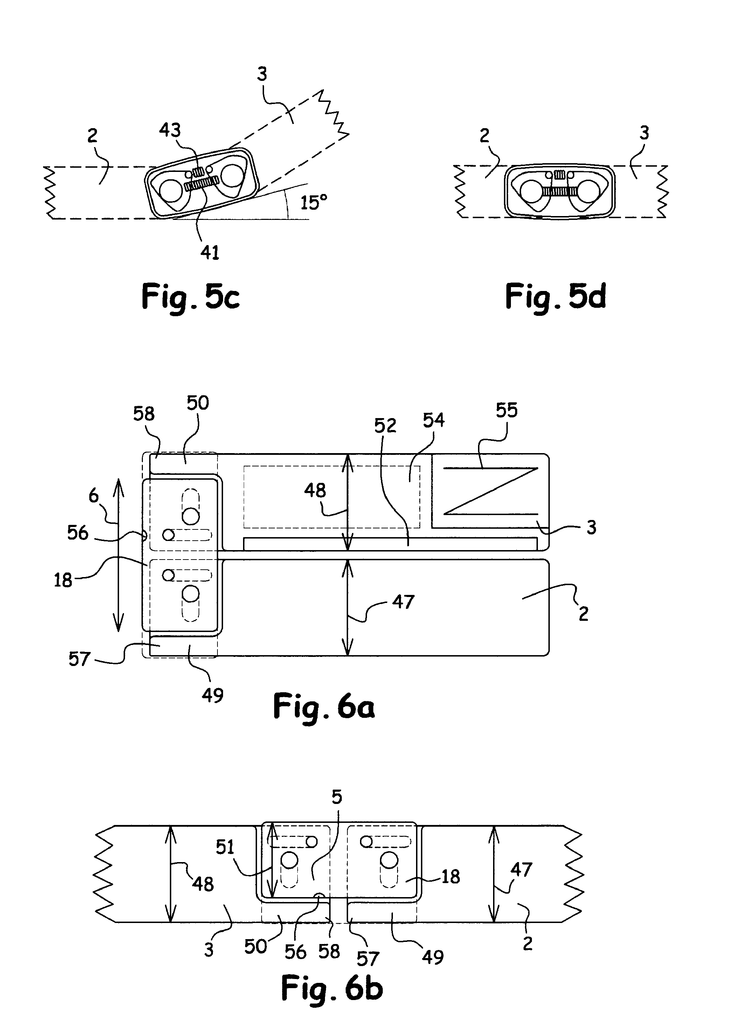

Les utilisations des figures 1a à 1e sont évidement transposables aux autres appareils cités ci-dessus. Notamment, pour un ordinateur portable on peut prévoir que l'inclinaison pourrait conduire à une diffusion plus ou moins forte du son par des haut-parleurs de cet ordinateur portable. Par ailleurs des variantes de réalisation de la charnière montrées sur les figures 6a et 6b permettront également de conditionner l'utilisation d'une caméra ou d'un haut-parleur à des états d'ouvertures différents.

Comme montré sur les figures 1a et 1c, il apparaît que les arêtes 16 des coques 2 et 3, à l'endroit où ces dernières sont en regard au moment de l'ouverture, peuvent être très fines, et notamment empêcher l'introduction de poussières. Comme on le verra plus loin, l'axe de rotation de la charnière 6, ou plutôt les axes, ne peuvent pas se situer dans le plan de la face extérieure de cette charnière. Ils doivent se trouver légèrement à l'intérieur des coques 2 et 3. On a résolu dans l'invention le problème de forçage des arêtes qui résulterait de cette disposition en prévoyant que la charnière comporte, au moins sur un des axes, un mécanisme excentrique pour moduler un écart 17 (figure 1a) entre la base 2 et le couvercle 3 au moment de la rotation. Notamment, cet écart 17 sera nul lorsque l'appareil sera fermé, figure 1a, ou lorsqu'il sera complètement ouvert, figures 1 b et 1 c. Dans ces deux derniers cas, l'écart sera mesuré par la différence d'altitude ou d'affleurement des deux plans internes des coques 2 et 3. On verra par la suite que cet écart croit progressivement, en particulier pour atteindre une valeur maximale, de préférence lorsque l'ouverture du couvercle 3 sur la base 2 est de l'ordre de 90°.

Les figures 2a et 2b permettent de comprendre la structure d'un exemple de la charnière 5 réalisée de préférence dans l'invention. Cette structure comporte un module 18, figure 2a, muni dans des plans perpendiculaires à la hauteur 6 de deux faces latérales respectivement 19 et 20. De ces deux faces latérales 19 et 20 émergent à chaque fois deux bouts d'arbres de rotation, respectivement 21 et 22 sur la face 19. Bien qu'il soit possible de ne disposer des bouts d'arbres que sur une des faces, la face 19 par exemple, de préférence pour un bon équilibre mécanique, dans l'invention des bouts d'arbres dépasseront aussi de la face 20. Les bouts d'arbres 21 et 22 sont prévus pour s'engager dans des pattes respectivement 23 et 24 attachées dans le prolongement latéral des coques 2 et 3, figure 1d. Les bouts d'arbres 21 et 22 tournent dans la charnière 5 alors qu'ils sont solidement fixés aux pattes 23 et 24 et donc aux coques 2 et 3. L'inverse est possible également.

On remarque à cet effet un premier avantage non négligeable de l'invention. Le module 18 formant la charnière 5 peut être fabriqué à part des coques 2 et 3, dans lesquelles sont installés différents circuits. La mise en place du module 18 entre les coques 2 et 3 permet de réaliser ensuite simplement toutes les liaisons mécaniques et électriques nécessaires comme on verra plus loin. Les connexions électriques peuvent passer (d'une manière non représentée) par l'intérieur des bouts d'arbre. Ceux-ci sont donc creux. En variante, une nappe flexible de connexions, d'orientation orthogonale aux bouts d'arbre, occupe l'espace intermédiaire entre ces bouts d'arbre.

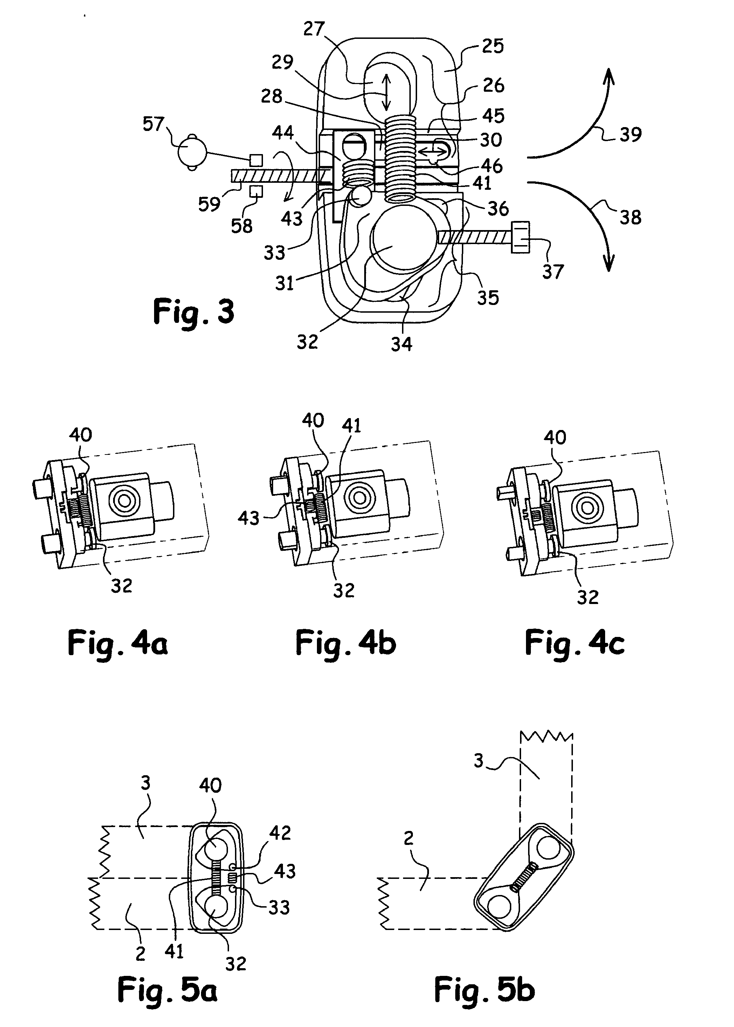

Les figures 2b et 3 montrent que le module 18 comporte, de préférence de chaque côté, près des faces 19 et 20, une plaque guide 25 fixée au module 18. Par exemple la plaque 25 est encastrée dans une réservation exacte de ce module 18. La plaque guide 25 comporte, de préférence, deux jeux de trous comportant chacun deux trous oblongs. Par exemple, un premier jeu 26 comporte les trous oblongs 27 et 28. Les trous 27 et 28 sont formés dans l'épaisseur de la plaque 25. Dans la représentation indiquée, le trou 27 est débouchant alors que le trou 28 est un trou en forme de cavité non débouchante. Ils pourraient néanmoins être tous les deux débouchants. Il est nécessaire toutefois qu'au moins un des trous soit débouchant de manière à laisser sortir les bouts d'arbres 21 et 22 et, éventuellement, à travers eux les connexions. La dimension oblongue 29 du premier trou 27 du jeu 26 est perpendiculaire à la dimension oblongue 30 du trou 28.

Une éclisse 31 jouant le rôle d'excentrique est munie de deux pivots respectivement 32 et 33. Les pivots 32 et 33, s'étendent perpendiculairement au plan de l'éclisse 31, lui-même parallèle au plan de la plaque guide 25. Le pivot 32 passe au travers d'un premier trou oblong 34 du deuxième jeu 35. Le pivot 33 s'engage dans un deuxième trou oblong 36 de ce deuxième jeu 35. L'éclisse 31 étant un objet rigide, lorsque le pivot 33 coulisse dans le trou oblong 36, le pivot 32 coulisse dans le trou oblong 34, et réciproquement. Ce faisant, l'éclisse 31 et les pivots 32 et 33 subissent une rotation.

Par l'intermédiaire d'une vis 37, représentée figurativement figure 3, la base 2 est accrochée au bout d'arbre 22. Le pivot 32 (creux lui aussi) est solidaire du bout d'arbre 22 qui débouche de l'autre côté de la plaque guide 25. Du fait que l'éclisse 31 tourne sur elle-même, selon un mouvement 38 on constate que la base 2 peut tourner par rapport au couvercle 3 selon un mouvement de rotation. Une éclisse complémentaire, engagée dans le premier jeu de trous oblongs tournerait selon un mouvement 39, Par ailleurs, du fait que le pivot 32 coulisse dans le trou 34 (et de même pour un pivot engagé dans le trou 27), ces deux pivots s'écartent l'un de l'autre. Cet écart entraîne, comme présenté ci-dessus, l'écart de la base 2 du couvercle 3.

Bien que dans une version préférée, à conservation de symétrie, la plaque 25 comporte deux jeux 25 et 35 de trous oblongs, il serait envisageable pour réaliser l'écart de ne mettre en place qu'un seul mécanisme excentrique.

En revenant à la figure 2b, montrée en perspective, on voit que le pivot 32 relié au bout d'arbre 22 peut être attaché, par une extrémité opposée au bout d'arbre 22, à un pivot 40 circulant dans le trou oblong 27. Il peut lui être attaché par l'intermédiaire d'un ressort de rappel 41. Il en est de même du pivot 33 circulant dans le trou oblong 36 qui peut être relié à un pivot 42 circulant dans le trou oblong 28 par l'intermédiaire d'un ressort 43 de rappel. La figure 2b montre que les ressorts 41 et 43 ne sont pas situés dans un même plan par rapport à la plaque guide 25, de façon à ce que, selon la position en rotation des différentes éclisses, les ressorts puissent passer l'un au-dessus de l'autre et occuper des positions l'un à côté de l'autre de chaque côté.

De manière à assurer en plus de l'écart une indexation, selon une caractéristique de symétrie présentée ci-dessus, les deux pivots 33 et 42 sont menés par une biellette 44 commune. La biellette 44 circule par exemple par glissement dans des rainures 45 dans la plaque guide 25. Les rainures 45 sont parallèles aux trous oblongs 28 et 36. Autrement dit, lorsqu'un pivot 33 occupe une position donnée dans un trou oblong 36, l'autre pivot 42 adopte du fait de la présence de la biellette 44 une position correspondante dans l'autre trou oblong 28. De ce fait, on obtient le résultat, figure 1e, que la normale 9 à la hauteur 6 de la charnière 5 soit toujours orientée comme la bissectrice.

La présence des ressorts 43 et 41 n'est pas indispensable. Toutefois, notamment pour l'ouverture ou la fermeture totale, ils permettent de trouver des positions stables. En effet, on constate que, figure 4a, lorsque l'appareil est complètement ouvert, les pivots 32 et 40 sont proches l'un de l'autre. De la même façon, figure 4c lorsque l'appareil est fermé, les pivots 32 et 40 sont proches l'un de l'autre. Les ressorts 41 et 43 assurent donc cette stabilité en favorisant ces rapprochements. Par contre, figure 4b, les pivots 32 et 40 sont éloignés l'un de l'autre et les ressorts 41 et 43 sont tendus pour une position en ouverture intermédiaire correspondant par exemple à la figure 1e. Dans ces cas, les ressorts 41 et 43 travaillent de préférence en traction. Il serait envisageable de les faire travailler en compression. On est donc conduit de cette façon à obtenir deux états stables : un en fermeture et un en ouverture du fait du rappel des ressorts.

De même, figures 5a à 5d, on voit ce qui ce passe pour les positions relatives des ressorts 41 et 43 selon que l'appareil passe d'une position fermée, figure 5a à une position ouverte, figure 5d. Une position pseudo stable se produit par frottement dans la position de la figure 5b lorsque les quatre pivots sont alignés dans un même plan les uns avec les autres. Cette position correspond à une ouverture à 90° du couvercle 3 par rapport à la base 2 (et aux positions stables par frottement de l'état de la technique).

Dans l'invention, on a voulu créer par ailleurs une autre position stable, figure 5c, correspondant par exemple à une ouverture de 150° avec une inclinaison de la charnière 5 par rapport à la base 2 d'environ 15°. On crée ainsi une position stable intermédiaire entre la position pseudo-stable de la figure 5b et la position stable extrême de la figure 5d dans laquelle l'appareil est complètement ouvert, par exemple pour être posé à plat. Pour obtenir ce résultat, on prévoit dans un exemple de réaliser dans le trou oblong 28, et de préférence également dans le trou oblong 36, une encoche 46. L'encoche 46 est réalisée dans une paroi latérale du trou oblong 28. Normalement, le trou oblong 28 est prévu pour recevoir le pivot 42 avec juste un jeu autorisant un coulissement aisé. Dans ce but, normalement la biellette 44 possède un trou pour laisser passer ce pivot 42 avec seulement un jeu de maintien. Ce trou est un trou rond.

Selon l'invention, on prévoit en plus que les trous dans la biellette 44 qui laissent passer les pivots 33 ou 42 soient eux-mêmes oblongs, dans le sens de la biellette, et autorisent un léger débattement de ces pivots 33 et 42 dans un sens perpendiculaire à la direction 30 du trou oblong 28.

Ce faisant, lorsque le pivot 42 arrive à l'aplomb de l'encoche 46, il peut être attiré par le ressort 43 et tomber dans l'encoche 46. Le trou oblong de la biellette 44 autorise ce déplacement. Une fois tombé dans ce trou, le pivot 42 empêche la circulation de la biellette 44 et provoque une position stable en ouverture de la charnière. Cette position stable est autre que la position extrême de la figure 5d qui est atteinte lorsque le pivot 42 arrive à l'extrémité du trou oblong 28. Eventuellement, on peut réaliser plusieurs de ces encoches 46 dans le trou oblong 28 pour correspondre à autant de positions stables que désirées. Bien entendu, les mêmes dispositions peuvent être réalisées dans le trou oblong 36. Les autres ouvertures stables provoquées possèdent de préférence des angles d'ouverture obtus, différents de 180°.

En variante les encoches peuvent être réalisées à la place, ou en complément, dans les parties latérales des trous oblongs 27 ou 34. Il est même possible de prévoir des trous oblongs réalisés simultanément dans le deux trous oblongs d'un même jeu de manière à parfaire le maintien en position.

De préférence, les encoches telles que 46 ne sont pas à bords latéraux verticaux mais à bords latéraux inclinés, de façon à permettre, en forçant sur la base 2 et le couvercle 3, à l'appareil 1 de continuer à s'ouvrir ou au contraire de retourner vers la fermeture.

Pour permettre une indexation d'utilisation, de préférence les fonds des encoches 46 seront métallisés et reliés à des pistes conductrices. Les pivots 33 et 42 eux-mêmes sont portés à un potentiel, par exemple en soumettant toute l'éclisse 31 à un potentiel. Dans ce cas, lorsque le pivot 42 tombe dans l'encoche 46 il déclenche l'apparition d'un signal électrique disponible sur la connexion de l'encoche 46. Ce signal peut d'être utilisé pour paramétrer l'utilisation du téléphone mobile : mains libres, usage discret, usage en visiophonie, usage en photographie, etc. Bien entendu, les extrémités des trous oblongs 28 et ou 27 ou autres peuvent être munis de ce même type de métallisation permettant le repérage de la position en ouverture de l'appareil pour conditionner ce type d'utilisation. Avec une telle solution la plaque 25 est en un matériau isolant alors que les pivot et l'éclisse sont en métal.

La figure 2b montre qu'une caméra est montée dans le module 18, entre des alignements de pivots situés sur des plaques guides, de part et d'autre du module 18. La caméra peut tourner sur elle-même et occuper à tour de rôle les directions 12 et 15 (figure 1c,1b). L'utilisation de la caméra peut être repérée par un dispositif d'indexation porté par son axe.

Les figures 6a et 6b montrent, en coupe centrale, différentes façons de réaliser le module 18. Dans ces figures, le module 18 dans lequel sont montrés d'une manière figurative les trous oblongs et les pivots, possède une hauteur 6 qui est inférieure à la somme des épaisseurs 47 et 48 de la base 2 et du couvercle 3. Sur la figure 6a, l'appareil est montré en position fermée. Sur la figure 6b, il est montré en position ouverte à 180°. Dans les deux cas, la réalisation de la charnière est telle qu'elle est toujours affleurante avec l'alignement des plans ou des chants de la base 2 et du couvercle 3. Sur ces figures, on constate néanmoins que les pattes (non visibles) 23 et 24 sont reliées entre elles par des murs 49 et 50. Les murs 49 et 50 peuvent venir masquer la charnière 5 lorsque l'appareil est complètement ouvert, figure 6b. Les murs 49 et 50 s'étendent sur la charnière 5 en prolongement des parties latérales des coques 2 et 3.

A l'opposé, selon une variante montrée en tirets et qui correspond par ailleurs aux dessins des figures 1a à 1e, la hauteur 6 de la charnière 5 est égale à la somme des hauteurs 47 et 48. Il n'y a plus de mur 49 et 50.

La charnière 5 comporte par ailleurs une épaisseur 51 qui est inférieure à l'épaisseur 47 ou 48 de la base 2 ou du couvercle 3 dans un cas (en traits pleins), ou qui est égale à ces épaisseurs dans l'autre cas (en tirets). De préférence, les épaisseurs 47 et 48 sont du même ordre voire identiques.

Dans un exemple où l'appareil électronique 1 est un téléphone mobile, le couvercle 3 comporte en sus d'un écran 52 un ensemble électronique 54 comportant des circuits de stockage de données ainsi qu'une antenne intégrée 55. L'antenne, ou les autres circuits 54 pourraient autrement être intégrés dans la base 2. Une antenne intégrée 55 présente la particularité d'être épaisse. Alors qu'une telle épaisseur serait un peu opposée à l'idée de concevoir un couvercle 3, elle se marie bien avec la solution de l'invention où on décide de réaliser un couvercle épais, et d'utiliser un espace restant dans le couvercle 3 pour mettre en place les circuits de stockage d'information. Ces informations sont notamment des morceaux musicaux enregistrés au format MP 3.

La charnière 5 peut, outre le fait de contenir une caméra, contenir un haut-parleur. La présence du haut-parleur situé ainsi au milieu entre le clavier et l'écran n'est pas gênante pour un téléphone mobile, du fait des modes connus d'utilisation. Par contre, cette disposition est particulièrement mise à profit dans l'invention, où, lorsque le téléphone mobile est fermé, position de la figure 6a, on utilise la charnière 5 pour laisser sortir le son par un orifice 56, permettant une très bonne diffusion de la sonnerie en cas d'appel entrant. Sans la présence de l'orifice 56 il pourrait d'être nécessaire de ménager une ouverture entre la base 2 et le couvercle 3, lorsqu'ils sont fermés, pour que le son produit par un haut-parleur interne puisse se propager à l'extérieur. Selon la variante montrée sur la figure 6b l'orifice 56 est masqué lorsque le téléphone mobile est complètement ouvert.

Il est possible d'utiliser, avec la variante de la figure 6a, une caméra et l'ouverture selon la figure 1d pour déclencher, avec l'indexation, l'utilisation à titre d'appareil photographique du téléphone mobile. En effet, pour une ouverture importante mais non totale de l'appareil, les extrémités 57 et 58 des coques 2 et 3 restant suffisamment espacées l'une de l'autre pour que la caméra puisse saisir un champs de vision utile.

Pour proposer une ouverture automatique, il est possible avec l'invention de motoriser l'ouverture de l'appareil 1. Dans ce but, comme montré figurativement figure 3, un moteur électrique 57 peut entraîner un écrou 58 engagé sur une vis sans fin 59. La rotation du moteur 57, qui peut être déclenchée par un bouton de commande d'ouverture, entraîne le déplacement longitudinal de la vis 59 par rapport à l'écrou 58. La vis est par ailleurs attachée à la biellette 44 qu'elle entraîne dans un sens ou un autre. Pour une ouverture manuelle, on peut prévoir que les filets de l'écrou 58 soient élastiques et acceptent un décrochage des filets de la vis 59. L'ensemble moteur 57, écrou 58 et vis 59 peut être miniaturisé. Au besoin, deux moteurs commandés en synchronisme peuvent remplacer la biellette 44 et, s'ils sont du type pas à pas, rendre les mêmes services que les encoches 46. Il suffit dans ce cas de compter les pas faits pour l'ouverture ou la fermeture pour indexer une utilisation.

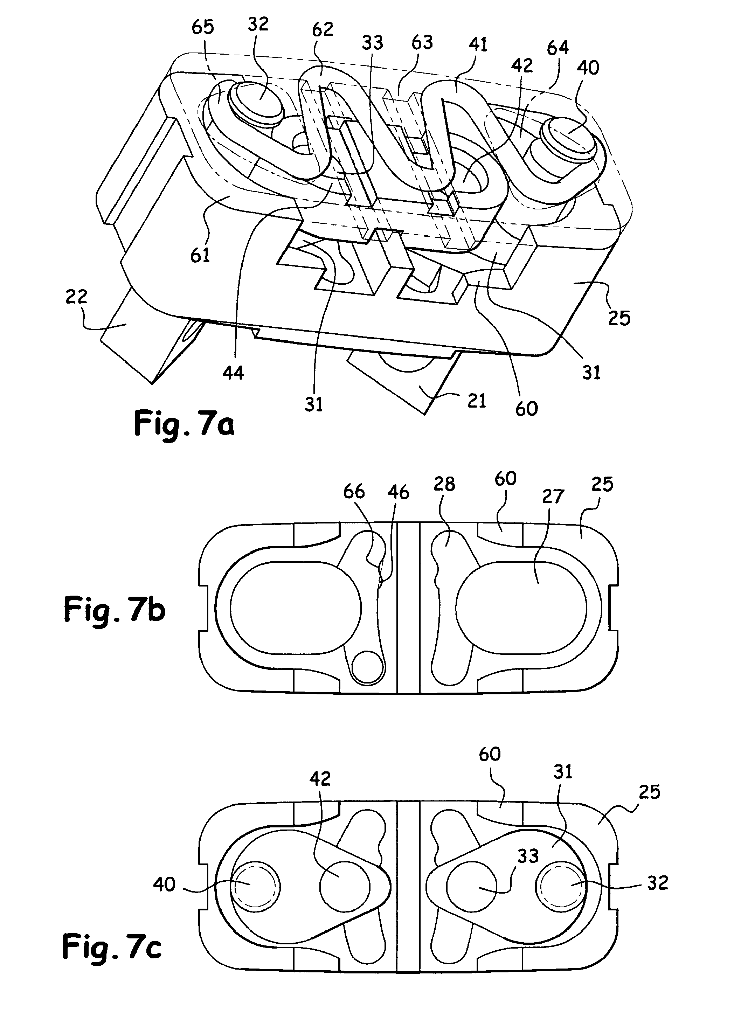

En variantes, les figures 7a à 7c montrent une autre réalisation de la plaque guide 25, de la biellette 44, et des trous oblongs 27 et 28.

En ce qui concerne la plaque guide 25, plutôt que de la former à plat, on lui a donné une forme globalement creuse, pour recevoir les éclisses 31 dans des réceptacles de nature à en limiter le mouvement. En effet, à pleine ouverture, il apparaît que les limites des mouvements sont procurées par les pivots tels que 33 ou 42 circulant dans les trous oblongs 28, par butée aux extrémités de ces trous oblongs 28. Compte tenu de ce que les pivots 33 ou 42 sont de faible diamètre, on a pu craindre leur manque de résistance. On a alors formé en surélévation par rapport au plan de la plaque guide 25 des murettes 60 venant limiter le déplacement des éclisses 31. Les murettes 60 sont élevées sur les bords de la plaque guide 25, en regard d'un endroit où les trous oblongs d'un même jeu se rejoignent. Leur hauteur est du même ordre que l'épaisseur des éclisses 31. Les éclisses 31 possèdent alors en correspondance une forme de triangles isocèles, les pivots 33 ou 42 se trouvant aux sommets de ces triangles isocèles et les pivots 40 ou 32 se trouvant au milieu des bases opposées à ces sommets. Lors du mouvement des éclisses 31, les côtés adjacents de ces triangles isocèles viennent s'appuyer contre les murettes 60 qui bloquent leur mouvement. De part et d'autre on obtient ainsi un blocage bien plus résistant, en complément ou à la place du blocage procuré par les pivots 33 et 42.

La biellette 44 est de préférence maintenue sur la plaque guide 25 par la présence d'un capot 61, montré en transparence sur la figure 7a en perspective. Ce capot 61 possède lui aussi un ensemble de rainures ou de cannelures 62 et 63 coopérant avec des cannelures ou des rainures correspondantes de la biellette 44. Ce capot contribue à la rigidité de la biellette 44. Le capot prend la place du ressort 42 qui est alors supprimé, son rôle étant joué par un ressort serpentin plat 41. Le capot 61 possède des ouvertures 64 et 65 de part et d'autre, en forme de triangle, pour laisser passer les pivots 40 et 32. Dans une version préférée, ces ouvertures en forme de triangle sont rendues nécessaires parce que le centre de rotation des bouts d'arbre 21 et 22 n'est pas coaxial au centre de rotation des pivots 40 et 32. Dans ce cas préféré, au moment de l'ouverture, il en résulte un léger déplacement du module 18 le long de la bissectrice 9. Dans cette variante, les ouvertures 64 et 65 jouent avec le ressort 41 le rôle de guidage des trous oblongs 27 et 28, à la place de ces trous oblongs 27 et 28. En conséquence ces ouvertures 64 et 65 forment aussi des trous oblongs, même si à une extrémité de ces trous oblongs 64 et 65 la largeur est plus grande qu'à l'autre extrémité. Dans ce cas, la plaque guide de l'invention doit se comprendre comme formée en fait de la plaque 25 et du capot 61.

Pour la réalisation de la position stable intermédiaire, l'encoche 46 possède d'un côté une pente provenant de la continuité du bord du trou oblong 28 (figure 7b). De l'autre côté, l'encoche 46 est bordée par une surépaisseur 66 formant un blocage plus important. Ce blocage 66 plus important est organisé pour s'opposer au déplacement naturel des pivots 40 et 32 sous l'effet du ressort 41.

Pour accentuer l'effet de retour aux positions stables procuré par le ressort 41, on prévoit que le trou oblong 28 n'est pas droit mais plutôt en forme d'arc de cercle. Le rayon de la courbure de l'arc de cercle d'un trou oblong d'un jeu de trous oblong est orienté vers l'autre jeu de trous oblongs. D'une part, cette disposition contribue à augmenter l'écartement des deux coques au moment de l'ouverture de l'appareil. D'autre part, elle contribue à augmenter l'effort de traction, en position intermédiaire, procuré par le ressort 41. De ce fait les deux coques peuvent rejoindre plus rapidement leur position d'équilibre.

A titre de perfectionnement, à l'endroit des accrochages des ressorts 41 et ou 43 sur les couples de pivots 32 et 40 et ou 33 et 42, on prévoit de munir les pivots 32, 33, 40 et 42 d'une bague, typiquement en bronze ou en PVC. La bague sert ainsi d'intermédiaire entre l'extrémité courbe des ressorts 41 ou 43 et la surface extérieure du pivot. L'expérience a montré que cette bague permettait un nombre de sollicitations supérieur à 150.000.

## Revendications

1. Appareil (1) électronique portable comportant une base (2) recouverte par un couvercle (3), et une articulation (5) pour déplacer le couvercle en un mouvement de rotation par rapport à la base, **caractérisé en ce que** l'articulation comporte au moins un mécanisme (31) excentrique pour moduler un écart (17) entre deux pivots (32, 40) qui maintiennent la base et le couvercle au moment de la rotation.

2. Appareil selon la revendication 1, **caractérisé en ce que** l'articulation comporte une charnière, ladite charnière comportant une épaisseur (51) égale à l'épaisseur (47, 48) de la base et ou du couvercle et une hauteur (6) égale à la somme des épaisseurs de la base et du couvercle.

3. Appareil selon **la revendication 1, caractérisé en ce que** l'articulation comporte une charnière, ladite charnière comportant une épaisseur inférieure à l'épaisseur de la base et ou du couvercle et une hauteur inférieure à la somme des épaisseurs de la base et du couvercle.

4. Appareil selon l'une des revendications 1 à 3, **caractérisé en ce que** l'articulation comporte
- au moins une plaque guide (25, 61) fixée à l'articulation (18), cette plaque guide comportant deux jeux (25, 35) de deux trous oblongs (27, 28, 34, 36), la dimension oblongue d'un premier trou d'un jeu étant perpendiculaire à la dimension oblongue d'un deuxième trou de ce jeu,
- une éclisse (31) excentrique munie de deux pivots (32, 33), les deux pivots circulant dans les premier et deuxième trous d'un jeu,
- une liaison (37) d'un premier des pivots à la base ou au couvercle pour autoriser la rotation de cette base ou de ce couvercle dans un mouvement modulant un écart.

5. Appareil selon la revendication 4, **caractérisé en ce qu'**il comporte une deuxième éclisse reliée respectivement au couvercle ou à la base, et une biellette (44) reliant entre eux les deuxièmes pivots.

6. Appareil selon la revendication 5, **caractérisé en ce qu'**il comporte un ressort (41) monté entre les premiers pivots et ou un ressort (43) monté entre les deuxièmes pivots.

7. Appareil selon l'une des revendications 4 à 6, **caractérisé en ce qu'**il comporte des moyens pour provoquer une première ouverture stable avec un angle de 180° d'inclinaison de la base sur le couvercle et une deuxième ouverture stable (46) avec un angle obtu différent de 180°, ces moyens étant notamment formés par une encoche réalisée dans au moins un des trous oblongs.

8. Appareil selon l'une des revendications 1 à 7, **caractérisé en ce qu'**il comporte un moteur pour provoquer un mouvement de rotation de la base par rapport au couvercle, notamment un moteur (57) pour déplacer une biellette.

9. Appareil selon l'une des revendications 1 à 8, **caractérisé en ce que** l'articulation comporte un haut-parleur.

10. Appareil selon la revendication 9, **caractérisé en ce que** le haut-parleur possède des moyens pour qu'une sortie acoustique (56) soit orientée en fonction de l'état d'ouverture de la base par rapport au couvercle.

11. Appareil selon l'une des revendications 1 à 10, **caractérisé en ce que** l'articulation comporte une caméra.

12. Appareil selon la revendication 11, **caractérisé en ce que** la caméra est orientable dans l'articulation.

13. Appareil selon l'une des revendications 1 à 12, **caractérisé en ce qu'**il est un téléphone mobile.

14. Appareil selon la revendication 13, **caractérisé en ce qu'**il comporte une antenne (55) intégrée dans la base ou le couvercle.

15. Appareil selon l'une des revendications 1 à 14, **caractérisé en ce que** l'articulation comporte au moins trois positions stables dont une en fermeture et deux en ouverture, avec des angles différents entre une orientation de la base et une orientation du couvercle.

## Patentansprüche

1. Tragbares elektronisches Gerät (1), welches eine von einer Klappe (3) abgedeckte Basis (2) und ein Gelenk (5) umfasst, um die Klappe mit einer Rotationsbewegung im Bezug auf die Basis zu verstellen, **dadurch gekennzeichnet, dass** das Gelenk mindestens einen exzentrischen Mechanismus (31) aufweist, um einen Abstand (17) zwischen zwei Drehbolzen (32, 40) anzupassen, welche die Basis und die Klappe zum Zeitpunkt der Rotation in Position halten.

2. Gerät nach Anspruch 1, **dadurch gekennzeichnet, dass** das Gelenk ein Scharnier aufweist, wobei besagtes Scharnier eine Dicke (51) aufweist, die gleich der Dicke (47, 48) der Basis und/oder der Klappe ist, und eine Höhe (6), die gleich der Summe der Dicke der Basis und der Klappe ist.

3. Gerät nach Anspruch 1, **dadurch gekennzeichnet, dass** das Gelenk ein Scharnier aufweist, wobei besagtes Scharnier eine Dicke aufweist, die geringer als die Dicke der Basis und/oder der Klappe ist, und eine Höhe, die geringer als die Summe der Dicke der Basis und der Klappe ist.

4. Gerät nach einem der Ansprüche 1 bis 3, **dadurch gekennzeichnet, dass** das Gelenk Folgendes aufweist
- mindestens eine Führungsplatte (25, 61), die an dem Gelenk (18) befestigt ist, wobei diese Führungsplatte zwei Sätze (26, 35) länglicher Löcher (27, 28, 34, 36) aufweist, wobei die längliche Dimension eines ersten Lochs eines Satzes senkrecht zu der länglichen Dimension eines zweiten Lochs dieses Satzes steht,
- eine exzentrische Lasche (31), die mit zwei Drehbolzen (32, 33) versehen ist, wobei sich die beiden Drehbolzen in dem ersten und zweiten Loch eines Sets drehen,
- eine Verbindung (37) eines ersten der Drehbolzen mit der Basis oder der Klappe, um die Rotation dieser Basis oder dieser Klappe mit einer einen Abstand verändernden Bewegung zu gestatten.

5. Gerät nach Anspruch 4, **dadurch gekennzeichnet, dass** dieses eine zweite Lasche aufweist, die jeweils mit der Klappe oder mit der Basis verbunden ist, und einen kleinen Pleuel (44), welcher die zweiten Drehbolzen miteinander verbindet.

6. Gerät nach Anspruch 5, **dadurch gekennzeichnet, dass** dieses eine Feder (41) aufweist, die zwischen den ersten Drehbolzen befestigt ist, und/oder eine Feder (43), die zwischen den zweiten Drehbolzen befestigt ist.

7. Gerät nach einem der Ansprüche 4 bis 6, **dadurch gekennzeichnet, dass** es Mittel zur Herbeiführung einer ersten stabilen Öffnung mit einem Neigungswinkel von 180° der Basis zur Klappe und einer zweiten stabilen Öffnung (46) mit einem stumpfen Winkel von weniger als 180° hat, wobei diese Mittel besonders durch eine Kerbe gebildet werden, die in wenigstens einem der länglichen Löcher angelegt ist.

8. Gerät nach einem der Ansprüche 1 bis 7, **dadurch gekennzeichnet, dass** dieses einen Motor aufweist, um eine Rotationsbewegung der Basis im Bezug auf die Klappe herbeizuführen, insbesondere einen Motor (57) zum Verstellen eines kleinen Pleuels.

9. Gerät nach einem der Ansprüche 1 bis 8, **dadurch gekennzeichnet, dass** das Gelenk einen Lautsprecher aufweist.

10. Gerät nach Anspruch 9, **dadurch gekennzeichnet, dass** der Lautsprecher Mittel besitzt, damit ein akustischer Ausgang (56) in Abhängigkeit vom Öffnungszustand der Basis im Bezug auf die Klappe ausgerichtet ist.

11. Gerät nach einem der Ansprüche 1 bis 10, **dadurch gekennzeichnet, dass** das Gelenk eine Kamera aufweist.

12. Gerät nach Anspruch 11 **dadurch gekennzeichnet, dass** die Kamera in dem Gelenk ausrichtbar ist.

13. Gerät nach einem der Ansprüche 1 bis 12, **dadurch gekennzeichnet, dass** dieses ein Mobiltelephon ist.

14. Gerät nach Anspruch 13, **dadurch gekennzeichnet, dass** dieses eine Antenne (55) aufweist, die in die Basis oder in die Klappe integriert ist.

15. Gerät nach einem der Ansprüche 1 bis 14, **dadurch gekennzeichnet, dass** das Gelenk mindestens drei stabile Positionen ermöglicht, darunter eine bei geschlossenem und zwei bei offenem Zustand, mit unterschiedlichen Winkeln zwischen einer Ausrichtung der Basis und einer Ausrichtung der Klappe.

## Claims

1. Portable electronic apparatus (1) including a base (2) covered by a lid (3), and an articulation (5) to displace the lid in a rotational movement relative to the base, **characterised by** the fact that the articulation includes at least an eccentric mechanism (31) to modulate a spacing (17) between two pivots (32, 40) which support the base and the lid at the moment of rotation.

2. Apparatus as described in claim 1, **characterised by** the fact that the articulation includes a hinge, the said hinge having a thickness (51) equal to the thickness (47, 48) of the base and or of the lid and a height (6) equal to the sum of the thicknesses of the base and of the lid.

3. Apparatus as described in claim 1, **characterised by** the fact that the articulation includes a hinge, the said hinge having a thickness less than the thickness of the base and or of the lid and a height less than the sum of the thicknesses of the base and of the lid.

4. Apparatus as described in one of claims 1 to 3, **characterised by** the fact that the articulation includes
- at least a guide plate (25, 61) fixed to the articulation (18), this guide plate including two sets (25, 35) of two oblong holes (27, 28, 34, 36), the oblong dimension of a first hole of a set being perpendicular to the oblong dimension of a second hole of this set,
- an eccentric plate (31) provided with two pivots (32, 33), the two pivots moving in the first and second holes of a set,
- a connection (37) of a first of the pivots to the base or to the lid to allow rotation of this base or of this lid in a movement modulating a spacing.

5. Apparatus as described in claim 4, **characterised by** the fact that it includes a second plate connected to the lid or to the base respectively, and a link (44) connecting the two pivots together.

6. Apparatus as described in claim 5, **characterised by** the fact that it includes a spring (41) mounted between the first pivots and or a spring (43) mounted between the second pivots.

7. Apparatus as described in one of claims 4 to 6, **characterised by** the fact that it includes means for causing a first stable opening with an angle of inclination of the base to the lid of 180° and a second stable opening (46) with an obtuse angle different from 180°, these means in particular being formed by a notch formed in at least one of the oblong holes.

8. Apparatus as described in one of claims 1 to 7, **characterised by** the fact that it includes a motor to cause a rotational movement of the base relative to the lid, in particular a motor (57) to displace a link.

9. Apparatus as described in one of claims 1 to 8, **characterised by** the fact that the articulation includes a loudspeaker.

10. Apparatus as described in claim 9, **characterised by** the fact that the loudspeaker has means for an acoustic output (56) to be orientated as a function of the state of opening of the base relative to the lid.

11. Apparatus as described in one of claims 1 to 10, **characterised by** the fact that the articulation includes a camera.

12. Apparatus as described in claim 11, **characterised by** the fact that the camera is orientatable in the articulation.

13. Apparatus as described in one of claims 1 to 12, **characterised by** the fact that it is a mobile telephone.

14. Apparatus as described in claim 13, **characterised by** the fact that it includes an antenna (55) integrated in the base or the lid.

15. Apparatus as described in one of claims 1 to 14, **characterised by** the fact that the articulation has at least three stable positions, one of which is closed and two open, with different angles between an orientation of the base and an orientation of the lid.
